# FASCICULE DE BREVET EUROPEEN

(11) **EP 4 511 260 B1**
(45) Date de publication et mention de la délivrance du brevet: **28.01.2026**
(21) Numéro de dépôt: 23713680.9
(22) Date de dépôt: 27.03.2023
(51) Int. Cl.: B60R 13/02

(54) **AGENCEMENT D'UN PAVILLON DE VÉHICULE AUTOMOBILE COMPRENANT UN PANNEAU DE TOIT EN VERRE**
ANORDNUNG EINES KRAFTFAHRZEUGDACHS MIT EINER GLASDACHPLATTE
ARRANGEMENT OF A MOTOR VEHICLE ROOF COMPRISING A GLASS ROOF PANEL

(30) Priorité: 20.04.2022 FR 2203626
(43) Date de publication de la demande: 26.02.2025
(73) Titulaire: Renault s.a.s, 92100 Boulogne Billancourt (FR)
(72) Inventeur: BOUILLON, Jean-Charles, 78280 GUYANCOURT (FR)
(86) Numéro de dépôt international: PCT/EP2023/057861
(87) Numéro de publication internationale: WO 2023/202845

(56) Documents cités:
- FR-A1- 2 948 906
- JP-A- 2022 048 562

## Description

L'invention concerne le domaine des agencements de pavillon d'un véhicule automobile comprenant un panneau de toit en verre.

Le terme « verre » s'entend au sens large, le panneau étant composé d'un ou plusieurs matériaux translucides ou transparents, c'est-à-dire permettant aux occupants du véhicule de voir à travers. Ces matériaux peuvent d'être de natures diverses, naturelles et/ou synthétiques, minérales et/ou organiques.

On recherche à offrir le meilleur confort et agrément possible aux occupants d'un véhicule. Un confort visuel à travers le pavillon contribue à la sensation de bien-être des occupants dans l'habitacle du véhicule.

A cet effet, il est connu de proposer un pavillon de véhicule automobile comprenant un panneau de verre au-dessus de l'habitacle, un tel pavillon étant qualifié couramment de toit panoramique. Pour le confort des occupants du véhicule, par exemple en cas de forte luminosité extérieure pour ne pas éblouir les occupants du véhicule et/ou minimiser le risque de surchauffe dans l'habitacle, on propose un agencement de pavillon comprenant un dispositif d'occultation mécanique qui est installé dans l'habitacle, en zone pavillonnaire intérieure afin de recouvrir ledit panneau de verre. Ce dispositif d'occultation mécanique comprend un rideau occultant coulissant et le mécanisme associé nécessaire (support, rail). Cet agencement comprend également une garniture d'habillage intérieure afin de cacher la zone pavillonnaire intérieure, hormis le panneau de verre sauf éventuellement sur son pourtour, qui serait visible depuis l'habitacle. Cette garniture d'habillage est thermoformée. En outre, cet agencement comprend un masquage extérieur, dit aussi émaillage, généralement de couleur noire, qui est appliqué sous forme d'une bande large au moins suivant le pourtour extérieur du panneau de verre, afin de cacher la partie de l'agencement du pavillon qui serait visible extérieurement à travers le panneau de verre. Plus généralement, les parties de l'agencement du pavillon à cacher sont déterminées par la configuration de l'agencement et selon le constructeur automobile.

Le confort visuel des occupants d'un véhicule a d'autant plus d'importance si l'habitacle est resserré du fait d'un pavillon bas, ce qui est la tendance recherchée notamment pour les véhicules haut sur roues pour améliorer leur aérodynamisme, car il permet d'éviter la sensation d'étroitesse, voire d'enfermement, qui pourrait être ressentie par certains occupants.

L'objectif de l'invention est de proposer un véhicule automobile dont le pavillon offre une grande surface de vision.

Une solution utilisant l'occultation électrochimique, dite aussi « E-velum », pourrait permettre un agrandissement de la surface de vision au niveau d'un toit de verre, par rapport à un toit de verre avec une occultation mécanique, toutefois la réalisation de cette plus grande surface de vision s'avère difficile à mettre en œuvre.

Il est en effet connu de permettre d'obscurcir réversiblement un panneau de verre électrochimiquement, par exemple par ajout d'au moins une couche électrochrome au verre. Cette occultation électrochimique peut par exemple être réalisée grâce à un film de cristaux liquides électrochromes intégré au verre dont le niveau de transparence se commande par une tension électrique. Un pavillon de véhicule avec un dispositif de gestion de l'alimentation électrique d'un panneau de verre électrochrome de toit d'un véhicule automobile est par exemple décrit dans la demande de brevet WO2007116174.

Toutefois l'utilisation d'une telle solution électrochimique n'est pas mise en pratique.

Par ailleurs il convient de conserver un agencement de pavillon le moins modifié possible par rapport à l'agencement du pavillon avec un panneau de verre et un dispositif d'occultation mécanique. Il s'avère que la garniture intérieure de l'agencement est thermoformée, ce qui pose des problèmes d'adaptation comme expliqué ci-après.

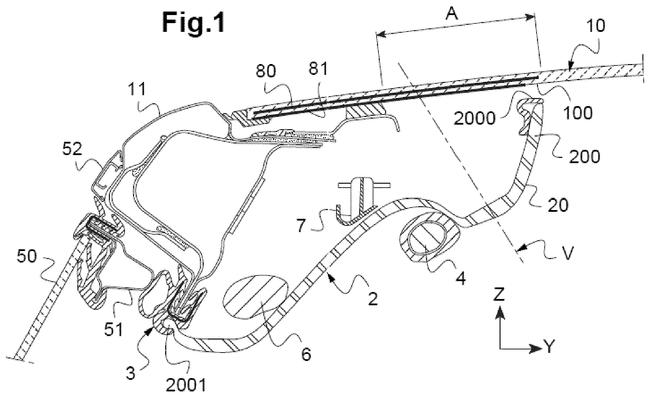

La figure 1 illustre schématiquement, suivant une coupe transversale latérale, un agencement d'un pavillon de véhicule automobile comprenant un panneau de toit en verre avec occultation mécanique, après avoir retiré son dispositif d'occultation mécanique comprenant un rideau occultant et tout le mécanisme associé. Cet agencement comprend le panneau de verre 10, une garniture d'habillage intérieure 2 du pavillon, qui est fixée en une extrémité 2001 par un système d'agrafe 3 à proximité du bord supérieur d'une vitre latérale 50, et qui était fixée en son autre extrémité 200 à un support solidarisé au mécanisme du rideau occultant, ce mécanisme était lui-même solidarisé à un support en forme de T fixé sur l'envers (face intérieure 100) du panneau de verre 10. La garniture peut comprendre un revêtement ou une peau 20 du côté apparent dans l'habitacle.

La zone pavillonnaire intérieure comprend selon cet exemple une poignée de virage 4 dans un creux de la garniture, côté interne, c'est-à-dire côté de l'habitacle, et un coussin de protection (dit « airbag ») 6, côté externe, c'est-à-dire côté du pavillon, ainsi qu'un espaceur 7.

Sur cette figure 1, sont en outre représentés une partie de la structure métallique 11 du pavillon qui entoure le panneau de verre 10, une partie supérieure du cadre métallique de la porte avant 51 qui comprend la vitre 50, et un joint d'étanchéité 52. Les bandes du masquage extérieur 80, 81 sont aussi représentées au niveau du panneau de verre 10.

Sur la figure 1, la distance A représente la valeur théorique maximale de surface de vision qui pourrait être récupérée au niveau du pavillon, pour ce côté du pavillon, en utilisant un panneau de toit en verre avec occultation électrochimique à la place d'un panneau de verre classique de même taille mais associé à une occultation mécanique.

Pour réaliser l'agencement, quand l'occultation mécanique est remplacée par une fonction « E-velum », on pense à venir coller la bordure 200 de cette garniture, qui était auparavant solidarisée au support solidarisé au mécanisme d'occultation mécanique, contre la face intérieure 100 du panneau de verre, ce qui nécessiterait de donner à cette extrémité de garniture un angle minimal de 10 à 15 degrés par rapport à la verticale (direction Z). Toutefois, cette garniture qui est thermoformée, ne peut pas être formée en contre dépouille pour venir sur la ligne oblique V, représentée sur la figure 1, qui symbolise la limite de surface de vision souhaitée pour donner le maximum de confort visuel pour les occupants du véhicule. Le document JP 2022 048562 A divulgue un agencement d'un pavillon de véhicule automobile comprenant un panneau de toit en verre à occultation électrochrome et une garniture intérieure d'habillage de l'envers du pavillon conforme au préambule de la revendication 1.

L'invention vise à fournir un grand confort visuel à travers un pavillon comprenant un panneau de verre avec occultation électrochimique tout en résolvant l'inconvénient d'un agencement du pavillon comprenant une garniture d'habillage intérieure, et plus particulièrement qui est thermoformée.

A cet effet, l'invention propose un agencement d'un pavillon de véhicule automobile comprenant un panneau de toit en verre transparent à occultation électrochrome et une garniture intérieure d'habillage de l'envers du pavillon au niveau du pourtour dudit panneau de verre, avec les caractéristiques de la revendication 1.

La partie inclinée dudit moyen de jonction penche vers le bord proximal du pavillon, ce qui donne une forme évasée vers le haut au pourtour intérieur du pavillon, de sorte que la surface de panneau de verre dégagée pour offrir une vision à travers le pavillon est relativement importante, plus importante que la surface disponible d'un panneau de verre avec un dispositif d'occultation mécanique.

Plus particulièrement l'extrémité de fixation dudit moyen de jonction se fixe au niveau du pourtour intérieur dudit panneau de verre.

De préférence, ledit moyen de jonction s'étend suivant sa direction longitudinale au moins suivant une partie du pourtour intérieur dudit panneau de verre.

De préférence, ledit moyen de jonction comprend au moins deux parties de jonction latérales, et de préférence encore au moins une partie de jonction frontale.

Selon un mode particulier de réalisation, ledit moyen de jonction peut se composer d'éléments séparés. Par exemple chaque dite partie de jonction peut correspondre à undit élément séparé.

Avantageusement ledit moyen de jonction est une pièce monobloc. En particulier ladite pièce peut comprendre au moins trois côtés. Elle peut comprendre quatre côtés de manière à être fermée sur elle-même pour former un cadre s'installant sur tout le pourtour intérieur du pavillon.

En particulier ledit moyen de jonction peut présenter des profils différents. Il peut avoir des épaisseurs et/ou des hauteurs différentes, et/ou des inclinaisons différentes selon la partie de la zone pavillonnaire considérée.

Plus particulièrement ladite partie inclinée peut présenter un angle d'inclinaison variable selon le périmètre dudit moyen de jonction. Autrement dit, son inclinaison est adaptée à la configuration entre le pourtour intérieur du panneau de verre et la partie de la garniture qui lui est solidarisée, par exemple selon l'espace disponible entre eux et/ou selon la verticalité de cet espace.

En particulier, l'extrémité dudit moyen de jonction solidaire de ladite garniture est solidarisée à la bordure de la garniture. Plus particulièrement ladite extrémité est configurée pour recouvrir au moins partiellement la tranche de ladite bordure de la garniture et recouvrir au moins en partie la face externe de ladite bordure. La face externe de la garniture, en particulier de ladite bordure, est définie comme étant la face tournée vers l'envers du pavillon, autrement dit tournée vers la face intérieure du panneau de verre.

En particulier, la bordure de la garniture comprend une courbure prolongée par une partie terminale orientée sensiblement à la verticale en direction du panneau de verre.

Selon un mode particulier de réalisation, ladite extrémité dudit moyen de jonction solidaire de ladite garniture est collée au moins en partie à la face externe de ladite bordure de la garniture. En particulier, elle est collée sur la face externe de ladite partie terminale de la bordure.

Selon un mode particulier de réalisation, ledit agencement comprend en outre une patte de fixation solidaire de la structure du pavillon, et ladite garniture est fixée à ladite patte de fixation. Plus particulièrement la face externe de ladite garniture est fixée à ladite patte de fixation, par exemple à l'aide de moyens de fixation autoagrippants.

Avantageusement selon l'invention, au moins la face interne dudit moyen de jonction est recouverte d'un tissu. La présence de tissu permet d'éviter la formation de reflets directs. De plus le tissu permet d'améliorer la qualité perçue.

La face interne dudit moyen de jonction est définie comme étant la face tournée vers l'intérieur de l'habitacle du véhicule, donc visible depuis l'intérieur de l'habitacle. De préférence, ledit moyen de jonction est réalisé en un matériau résistant à la chaleur et à la déformation.

De préférence, ledit moyen de jonction est réalisé en un matériau injecté à base de matière plastique. En particulier ledit matériau est à base de polyoléfine. De préférence ledit matériau comprend des charges conférant une résistance à la chaleur et à la déformation. En particulier lesdites charges sont des fibres de verre, et plus particulièrement des fibres de verre longues. En particulier ledit matériau peut comprendre 15 à 40 % en poids de fibres de verre longues.

En particulier, ledit panneau de verre est un panneau fixe.

L'invention concerne aussi un véhicule automobile comprenant un agencement d'un pavillon de véhicule automobile comprenant un panneau de toit en verre tel que décrit précédemment.

D'autres particularités et avantages de l'invention ressortiront à la lecture de la description faite ci-après de modes de réalisation particuliers de l'invention, donnés à titre indicatif mais non limitatif, et en référence aux dessins annexés.
[Fig. 1] illustre schématiquement, suivant une coupe transversale latérale de la zone pavillonnaire d'un véhicule automobile, la partie de vision théorique récupérable pour un agencement d'un pavillon de véhicule automobile comprenant un panneau de toit en verre une fois un dispositif d'occultation mécanique enlevé.

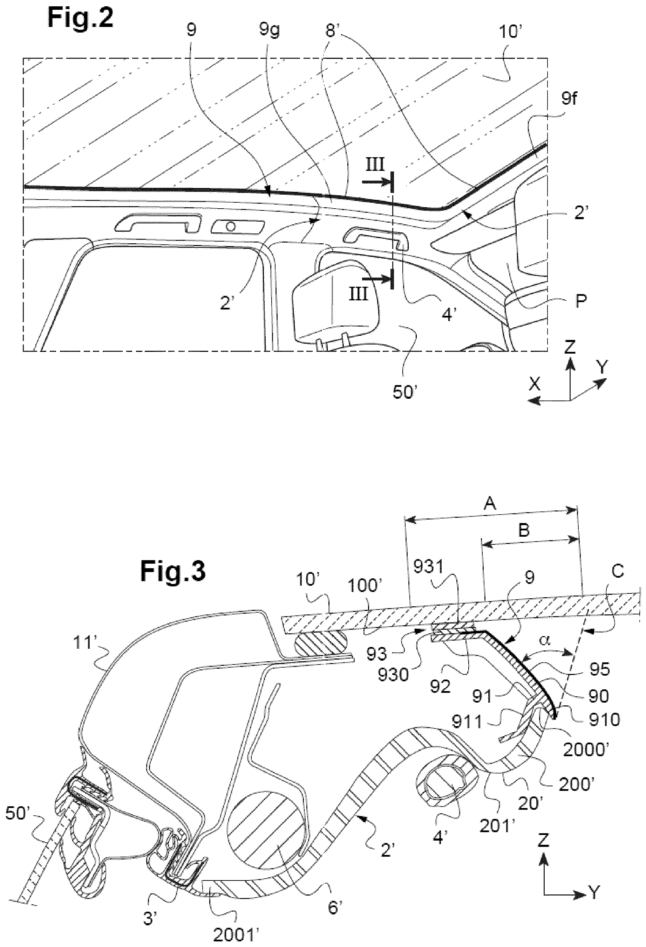

[Fig. 2] illustre suivant une vue partielle en perspective , la partie avant supérieure d'un véhicule automobile avec un agencement du pavillon comprenant un panneau de toit en verre électrochrome, conforme à l'invention, depuis l'intérieur de l'habitacle.
[Fig. 3] illustre schématiquement, suivant une coupe transversale latérale III-III au niveau de la zone pavillonnaire, en partie latérale avant supérieure d'un véhicule automobile comme indiqué sur la figure 2, un agencement d'un pavillon de véhicule automobile comprenant un panneau de toit en verre électrochrome, conforme à l'invention.

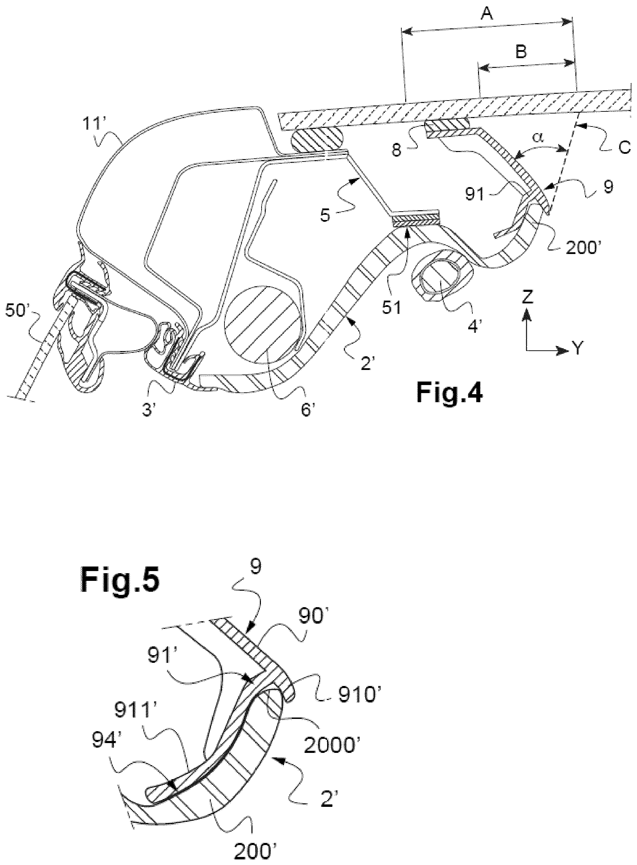

[Fig. 4] illustre schématiquement, suivant une coupe transversale latérale III-III au niveau de la zone pavillonnaire, en partie latérale avant supérieure d'un véhicule automobile comme indiqué sur la figure 2, une variante d'un agencement d'un pavillon de véhicule automobile comprenant un panneau de toit en verre électrochrome, conforme à l'invention.
[Fig. 5] illustre schématiquement, suivant une coupe transversale au niveau au niveau de la zone pavillonnaire, en partie latérale avant supérieure d'un véhicule automobile, une variante du pied d'un moyen de jonction d'un agencement d'un pavillon de véhicule automobile comprenant un panneau de toit en verre électrochrome, conforme à l'invention.

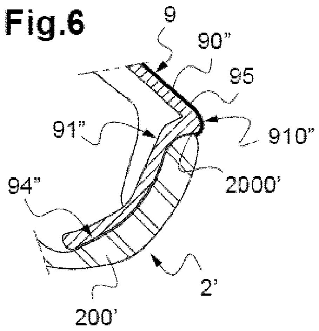

[Fig. 6] illustre schématiquement, suivant une coupe transversale au niveau de la zone pavillonnaire, en partie latérale avant supérieure d'un véhicule automobile, une autre variante du pied d'un moyen de jonction d'un agencement d'un pavillon de véhicule automobile comprenant un panneau de toit en verre électrochrome, conforme à l'invention.

Sauf précisions contraires, les orientations exprimées dans la description des figures sont données en référence à un repère orthonormé classique XYZ du véhicule dans lequel X représente la direction longitudinale avant-arrière du véhicule, orientée vers l'arrière, Y la direction transversale du véhicule, orientée vers la droite, et Z la direction verticale orientée vers le haut du véhicule. Ces directions correspondent à celles du pavillon du véhicule.

Des références identiques pourront être utilisées d'une figure à l'autre pour désigner des éléments identiques ou similaires.

La figure 1 a été commentée plus haut en introduction, relativement à l'état de la technique.

La figure 2 illustre de manière générale, suivant une vue partielle en perspective depuis l'intérieur de l'habitacle d'un véhicule automobile, la partie avant supérieure d'un véhicule automobile avec un agencement du pavillon comprenant un panneau de toit en verre 10' qui est électrochrome, conformément à l'invention. Ledit panneau de verre est un panneau fixe, c'est-à-dire que le panneau n'est pas un ouvrant.

L'agencement illustré, comprend une pièce de jonction 9 de la garniture intérieure d'habillage 2' au panneau de verre 10'. Cette pièce de jonction 9 présente de manière visible une partie latérale gauche 9g, et une partie frontale 9f, au-dessus du pare-brise P. Selon l'exemple elle comprend une partie latérale droite et une partie arrière non visibles.

Un émaillage de masquage 8' est également représenté sur la face externe du panneau de verre.

Un exemple plus détaillé d'un agencement du pavillon conforme à l'invention, est illustré en figure 3, suivant une coupe transversale latérale dans le plan III-III au niveau de la zone pavillonnaire, en haut de la vitre latérale 50' et passant par la poignée de virage 4', comme indiqué sur la figure 2.

On retrouve des composants de la zone pavillonnaire similaires à ceux décrits plus haut pour la figure 1, notamment une poignée de virage 4', un coussin de protection 6', un système d'agrafe 3' qui retient une extrémité 2001' de la garniture d'habillage 2', et la structure métallique 11' du pavillon qui entoure le panneau de verre 10'.

Cet agencement comprend la pièce de jonction 9 et la garniture d'habillage 2' dont la bordure solidarisée à la pièce de jonction 9 sont sensiblement différentes de celles de la garniture de la figure 1.

La garniture d'habillage 2', pour sa raideur, comporte une bordure comprenant une courbure 201' et, dans le prolongement de cette courbure, une portion terminale 200', sensiblement droite et orientée sensiblement verticalement en direction du panneau de verre, de faible longueur. Cette portion terminale 200' fait de l'ordre de 20mm de haut.

La garniture d'habillage 2' comprend un revêtement ou une peau 20' du côté apparent dans l'habitacle.

La pièce de jonction 9 comprend une portion inférieure 91 à deux branches 910, 911 formant une pince retenant la bordure de la garniture, pince dans laquelle s'emboite la portion terminale verticale 200' de ladite garniture en recouvrant la tranche 2000' de ladite portion terminale. L'une des branches 910 de la pince est en appui sur la face côté habitacle de la bordure et l'autre branche 911 est en appui sur la face opposée de la bordure.

La pièce de jonction 9 comprend une partie supérieure plane 92 qui est la partie de fixation au panneau de verre.

Cette pièce de jonction 9 comprend une partie inclinée 90, sensiblement rectiligne, qui s'étend entre et en prolongement de la partie inférieure 91 et de ladite partie supérieure de fixation 92. Cette partie inclinée à un angle d'inclinaison ouvert vers le pourtour du panneau de verre, ce qui donne une forme évasée vers le haut à la pièce de jonction, de sorte que la surface de vision à travers le pavillon depuis l'habitacle est agrandie. La lumière extérieure pénètre mieux dans l'habitacle.

Il est possible ainsi de gagner 60% de la part de surface inutilisée du panneau de toit en verre. La cote B de gain obtenu par rapport à la limite de surface de vision utilisée d'un pavillon à panneau de verre avec occultation mécanique, peut être comprise entre 20 et 50 mm par côté de pavillon, suivant l'architecture du véhicule. La distance A illustre la valeur théorique maximale de surface de vision qui pourrait être récupérée au niveau du pavillon, pour ce côté du pavillon, en utilisant un panneau de toit en verre avec occultation électrochrome à la place d'un panneau de verre classique de même taille mais associé à une occultation mécanique.

L'angle α entre la partie inclinée de la pièce de jonction 9 et la ligne C symbolisant la limite antérieure de la surface de vision utilisée d'un pavillon à panneau de verre avec occultation mécanique, est compris entre 40 et 75 degrés.

En outre la face interne (côté habitacle) de l'élément de jonction 9 est recouverte d'un tissu 95, ce qui permet notamment d'éviter la formation de reflets directs comme expliqué plus loin.

La fixation de la partie supérieure de fixation 9, selon l'exemple, se fait par un système autoagrippant 93 tel que celui de type connu sous la marque Velcro^{®} . Cette partie de fixation 92 supporte selon l'exemple des morceaux autoagrippants mâles 930, disposés le long de la pièce de jonction 9, par exemple tous les 200 à 250 mm, de manière à être fixés à des morceaux autoagrippants femelles 931 collés à la face intérieure 100' du panneau de verre et disposés de manière à être en vis-à-vis desdits morceaux femelles.

Ainsi le pavillon sur lequel la pièce de jonction 9 a été préalablement assemblée, est fixé verticalement sur le toit en verre en pressant les morceaux auto agrippant mâle 930 contre les morceaux autoagrippants femelles 931 portés par le panneau de verre.

Une variante d'un agencement du pavillon conforme à l'invention, est illustré en figure 4, suivant une coupe transversale latérale dans le plan III-III au niveau de la zone pavillonnaire, en haut de la vitre latérale 50' et passant par la poignée de virage 4', comme indiqué sur la figure 2. Selon cet autre mode de réalisation, l'élément de jonction 9 est préalablement collé par une couche de colle 8 sur le toit en verre 10', avant de monter la garniture de pavillon. Lors de son montage, le bord 200' de la garniture 2 vient se caler contre l'extrémité 91 de l'élément de jonction 9 et est bloqué verticalement. Afin de garantir le placage du pavillon contre l'élément de jonction 9, il est alors nécessaire de mettre en contrainte la garniture de pavillon 2' selon une direction verticale. A cette fin, des fixations autoagrippantes 52 sont alors disposées entre la garniture de pavillon 2' et une patte de fixation horizontale 5 reliées à la structure 11'. Le morceau autoagrippant porté par la garniture de pavillon 2' peut être soit collé directement sur la face externe de la garniture 2 soit collé sur un pontet lui-même rapporté sur la face externe de la garniture en fonction de la distance existant entre la patte de fixation 5 et la garniture 2'.

Selon une variante, la pièce de jonction 9 peut comprendre une partie inférieure 91' qui retient la bordure de garniture 2' telle qu'illustrée en figure 5. Cette partie inférieure 91' épouse en partie la forme de la bordure 200'( voire y compris la portion courbe 201') de la garniture 2'. Elle présente une première branche formant un talon 910' en saillie contre laquelle la tranche 2000' de la bordure de la garniture vient en appui. En outre elle présente une deuxième branche 911'qui épouse la face externe de la bordure 200', voire y compris la portion courbe 201'et qui est collée à la garniture, suivant cette face externe. Par exemple elle est collée par une couche d'adhésif 94' qui a été pulvérisé sur cette face externe de la bordure de la garniture (face non visible depuis l'intérieur de l'habitacle).

Selon une autre variante, la pièce de jonction 9 peut comprendre une partie inférieure 91" qui retient la bordure 200' de garniture telle qu'illustrée en figure 6. Cette partie inférieure 91" épouse en partie la forme de la bordure 200' de la garniture 2'. Comme à l'exemple de la figure 5, elle présente une branche 911'qui épouse la face externe de la bordure 200', voire y compris la portion courbe 201', et y est collée. Elle présente une autre branche formant un simple talon 910" qui recouvre presqu'entièrement la tranche de la bordure de la garniture. De plus la partie inclinée, ledit talon, et ladite branche qui se colle à la garniture sont revêtus sur leur face interne (côté habitacle ou garniture) par un tissu 95, ce qui change la section de finition avec le pavillon. Le gain en qualité perçue est notable, offrant une finition sans jeu entre le pavillon rembordé et cette pièce de jonction 9. Les pentes coniques de l'élément de jonction 9 placé juste sous le toit en verre pouvant gêner le conducteur en reflétant la lumière du soleil, la présence de tissu permet d'éviter la formation de reflets directs. De plus , la présence de tissu sur l'élément de jonction 9 permet d'améliorer la qualité perçue en homogénéisant l'aspect général dudit élément 9 et du reste de la garniture de pavillon 2'.

Selon une variante non représentée, la fixation par un système autoagrippant peut être remplacée par une mousse anti-bruit collée sur la pièce de jonction d'une part et d'autre part sur le panneau de verre, ce qui évite l'opération de collage des fixations mâles sur le panneau de verre.

La pièce de jonction 9 est réalisée en un matériau plastique injecté. Selon l'exemple elle est en matériau à base de polypropylène chargé en fibres de verre longues à 15% (PP GFL 15 ), ce qui lui confère une bonne résistance à la chaleur et à la déformation, nécessaire notamment du fait qu'elle est située juste sous le panneau de verre et peut être soumise à un effet de serre.

La pièce de jonction est réalisée, selon ces exemples non limitatifs, sous forme d'une pièce monobloc. Cette pièce peut présenter des profils différents suivant son périmètre. Elle peut par exemple avoir des épaisseurs et/ou des hauteurs différentes, et notamment des inclinaisons différentes selon la zone pavillonnaire concernée. Par exemple elle peut comprendre deux parties latérales gauche et droite situées respectivement au niveau latéral gauche et droite du pavillon et une partie frontale située à l'avant du pavillon, les parties latérales comportant une partie inclinée ayant une inclinaison plus forte que celle de la partie frontale. La pièce de jonction peut comprendre une partie arrière inclinée ou une partie arrière faiblement inclinée. Elle peut aussi ne pas en comprendre de partie arrière. En effet l'intérêt d'une vision plus large depuis l'arrière du pavillon est de moindre importance pour contribuer au confort visuel dans l'habitacle.

Alternativement, la pièce de jonction peut aussi être constituée de plusieurs éléments séparés.

En outre des bandes d'émaillage noir sont appliquées sur la face extérieure du panneau de verre, en regard du pourtour de manière à masquer les zones limites intérieures de l'agencement de toit qui seraient visibles depuis l'extérieur à travers le panneau de verre. La largeur de ces bandes est bien moindre que celle des émaillages de l'art antérieur, ce qui contribue aussi à agrandir la surface de vision.

L'invention a atteint ses objectifs car elle permet d'agrandir la surface de vision à travers le panneau de toit en verre pour accroitre le confort visuel et la sensation de bien-être qui en découle pour les occupants du véhicule. De plus une telle occultation « E-velum » remplace avantageusement une occultation mécanique, notamment du fait qu'elle peut procurer un allègement puisqu'il il n'y a plus besoin de rideau coulissant et du mécanisme associé. L'invention présente donc notamment l'avantage de donner l'impression aux occupants du véhicule d'être moins enfermés dans l'habitacle. C'est notamment le cas pour un habitacle resserré, par exemple dans le cas des véhicules relativement hauts pour lesquels le niveau du pavillon a été abaissé pour réduire la hauteur de l'habitacle afin d'améliorer leur aérodynamisme, notamment en améliorant le coefficient de traînée (dit Cx). Ce dernier cas correspond à une tendance forte pour les véhicules hauts, afin de réduire leur consommation énergétique.

## Revendications

1. Agencement d'un pavillon de véhicule automobile comprenant un panneau de toit en verre (10') à occultation électrochrome et une garniture intérieure d'habillage (2') de l'envers du pavillon, au niveau du pourtour dudit panneau de verre, ledit agencement comprenant un moyen de jonction (9) de ladite garniture à la face intérieure (100') dudit panneau de verre, ledit moyen de jonction (9) comprenant au moins deux extrémités (91, 92), l'une desdites extrémités (91) étant solidaire de ladite garniture et l'autre extrémité étant une extrémité de fixation (92) se fixant à la face intérieure dudit panneau de verre, **caractérisé en ce que** ledit moyen de jonction (9) comprend une partie inclinée (90) s'étendant selon sa hauteur entre lesdites deux extrémités et dont l'inclinaison est orientée suivant un angle ouvert vers le bord proximal du panneau de verre, de manière à pencher vers le bord proximal du pavillon en donnant une forme évasée vers le haut au pourtour intérieur du pavillon.

2. Agencement selon la revendication 1, **caractérisé en ce que** ledit moyen de jonction (9) s'étend suivant sa direction longitudinale au moins suivant une partie du pourtour intérieur dudit panneau de verre.

3. Agencement selon l'une des revendications 1 à 2, **caractérisé en ce que** ledit moyen de jonction (9) comprend au moins deux parties de jonction latérales (9g), et de préférence encore au moins une partie de jonction frontale (9f).

4. Agencement selon l'une des revendications 1 à 3, **caractérisé en ce que** ladite partie inclinée (90) présente un angle d'inclinaison variable selon le périmètre dudit moyen de jonction (9).

5. Agencement selon l'une des revendications 1 à 4, **caractérisé en ce que** la garniture (2') comprend une bordure, et en particulier ladite bordure comprend une courbure (201') prolongée par une partie terminale (200') orientée sensiblement à la verticale en direction du panneau de verre.

6. Agencement selon la revendication 5, **caractérisé en ce que** l'extrémité (91) dudit moyen de jonction, solidaire de ladite garniture (2'), est solidarisée à la bordure (200', 201') de la garniture.

7. Agencement selon la revendication 6, **caractérisé en ce que** ladite extrémité (91) est configurée pour recouvrir au moins partiellement la tranche (2000') de ladite bordure de la garniture et recouvrir au moins en partie la face externe de ladite bordure.

8. Agencement selon l'une des revendications 1 à 7, **caractérisé en ce qu'**au moins la face interne dudit moyen de jonction (9) est recouverte d'un tissu (95).

9. Agencement selon l'une des revendications 1 à 8, **caractérisé en ce qu'**il comprend une patte de fixation (5) solidaire de la structure du pavillon (11'), et ladite garniture (2') est fixée à ladite patte de fixation (5).

10. Agencement selon l'une des revendications 1 à 9, **caractérisé en ce que** ledit moyen de jonction (9) est réalisé en un matériau injecté à base de matière plastique, et de préférence ledit matériau est résistance à la chaleur et à la déformation.

11. Agencement selon l'une des revendications 1 à 10, **caractérisé en ce que** ledit panneau de verre (10') est fixe.

12. Véhicule automobile, **caractérisé en ce qu'**il comprend un agencement de son pavillon selon l'une des revendications 1 à 11.

## Patentansprüche

1. Anordnung eines Kraftfahrzeugdachs, beinhaltend eine Glasdachplatte (10') mit elektrochromer Verdunkelung und eine Innenzierverkleidung (2') auf der Rückseite des Dachs im Bereich des Umfangs der Glasplatte, wobei die Anordnung ein Mittel zum Verbinden (9) der Verkleidung mit der Innenseite (100') der Glasplatte beinhaltet, wobei das Verbindungsmittel (9) mindestens zwei Enden (91, 92) beinhaltet, wobei eines der Enden (91) fest mit der Verkleidung verbunden ist und das andere Ende ein Befestigungsende (92) ist, das an der Innenseite der Glasplatte befestigt wird, **dadurch gekennzeichnet, dass** das Verbindungsmittel (9) einen geneigten Teil (90) beinhaltet, der sich entlang seiner Höhe zwischen den zwei Enden erstreckt und dessen Neigung in einem geöffneten Winkel zu dem proximalen Rand der Glasplatte hin ausgerichtet ist, sodass er sich zu dem proximalen Rand des Dachs hin beugt und dem Innenumfang des Dachs eine nach oben aufgeweitete Form verleiht.

2. Anordnung nach Anspruch 1, **dadurch gekennzeichnet, dass** sich das Verbindungsmittel (9) entlang seiner Längsrichtung mindestens entlang eines Teils des Innenumfangs der Glasplatte erstreckt.

3. Anordnung nach einem der Ansprüche 1 bis 2, **dadurch gekennzeichnet, dass** das Verbindungsmittel (9) mindestens zwei seitliche Verbindungsteile (9g) und vorzugsweise noch mindestens einen frontalen Verbindungsteil (9f) beinhaltet.

4. Anordnung nach einem der Ansprüche 1 bis 3, **dadurch gekennzeichnet, dass** der geneigte Teil (90) einen Neigungswinkel aufweist, der entlang des Umfangs des Verbindungsmittels (9) variabel ist.

5. Anordnung nach einem der Ansprüche 1 bis 4, **dadurch gekennzeichnet, dass** die Verkleidung (2') eine Umrandung beinhaltet und die Umrandung insbesondere eine Krümmung (201') beinhaltet, die durch einen Abschlussteil (200') verlängert wird, der im Wesentlichen vertikal in Richtung der Glasplatte ausgerichtet ist.

6. Anordnung nach Anspruch 5, **dadurch gekennzeichnet, dass** das Ende (91) des Verbindungsmittels, das fest mit der Verkleidung (2') verbunden ist, fest mit der Umrandung (200', 201') der Verkleidung verbunden ist.

7. Anordnung nach Anspruch 6, **dadurch gekennzeichnet, dass** das Ende (91) dazu konfiguriert ist, die Kante (2000') der Umrandung der Verkleidung mindestens teilweise zu bedecken und die externe Seite der Umrandung mindestens teilweise zu bedecken.

8. Anordnung nach einem der Ansprüche 1 bis 7, **dadurch gekennzeichnet, dass** mindestens die interne Seite des Verbindungsmittels (9) von einem Gewebe (95) bedeckt ist.

9. Anordnung nach einem der Ansprüche 1 bis 8, **dadurch gekennzeichnet, dass** sie eine Befestigungslasche (5) beinhaltet, die fest mit der Dachstruktur (11') verbunden ist, und die Verkleidung (2') an der Befestigungslasche (5) befestigt ist.

10. Anordnung nach einem der Ansprüche 1 bis 9, **dadurch gekennzeichnet, dass** das Verbindungsmittel (9) aus einem eingespritzten Material auf Kunststoffbasis hergestellt ist und das Material vorzugsweise hitze- und formbeständig ist.

11. Anordnung nach einem der Ansprüche 1 bis 10, **dadurch gekennzeichnet, dass** die Glasplatte (10') fest ist.

12. Kraftfahrzeug, **dadurch gekennzeichnet, dass** es eine Anordnung seines Dachs nach einem der Ansprüche 1 bis 11 beinhaltet.

## Claims

1. Arrangement of a motor vehicle roof comprising a glass roof panel (10') with electrochromic dimming and an inner trim lining (2') on the underside of the roof, at the periphery of said glass panel, said arrangement comprising a joining means (9) for joining said lining to the inner face (100') of said glass panel, said joining means (9) comprising at least two ends (91, 92), one of said ends (91) being secured to said lining and the other end being a fastening end (92) which is fastened to the inner face of said glass panel, **characterized in that** said joining means (9) comprises an inclined part (90) which extends along its height between said two ends and the inclination of which is oriented at an open angle towards the proximal edge of the glass panel, so as to slope towards the proximal edge of the roof, providing a shape which is flared towards the top at the inner periphery of the roof.

2. Arrangement according to Claim 1, **characterized in that** said joining means (9) extends, in its longitudinal direction, at least along part of the inner periphery of said glass panel.

3. Arrangement according to either of Claims 1 and 2, **characterized in that** said joining means (9) comprises at least two lateral joining parts (9g), and preferably also at least one frontal joining part (9f).

4. Arrangement according to one of Claims 1 to 3, **characterized in that** said inclined part (90) has a variable angle of inclination along the perimeter of said joining means (9).

5. Arrangement according to one of Claims 1 to 4, **characterized in that** the lining (2') comprises a border, and in particular said border comprises a curvature (201') extended by a terminal part (200') oriented substantially in the vertical in the direction of the glass panel.

6. Arrangement according to Claim 5, **characterized in that** that end (91) of said joining means which is secured to said lining (2') is secured to the border (200', 201') of the lining.

7. Arrangement according to Claim 6, **characterized in that** said end (91) is configured to at least partially cover the edge portion (2000') of said border of the lining and to at least partially cover the outer face of said border.

8. Arrangement according to one of Claims 1 to 7, **characterized in that** at least the inner face of said joining means (9) is covered with a fabric (95).

9. Arrangement according to one of Claims 1 to 8, **characterized in that** it comprises a fastening lug (5) secured to the structure of the roof (11'), and said lining (2') is fastened to said fastening lug (5).

10. Arrangement according to one of Claims 1 to 9, **characterized in that** said joining means (9) is made of a plastics-based injected material, and said material is preferably resistant to heat and to deformation.

11. Arrangement according to one of Claims 1 to 10, **characterized in that** said glass panel (10') is fixed.

12. Motor vehicle, **characterized in that** it comprises an arrangement of its roof according to one of Claims 1 to 11.
